# EUROPEAN PATENT APPLICATION

(11) **EP 3 955 415 A1**
(43) Date of publication of application: **16.02.2022**
(21) Application number: 20788386.9
(22) Date of filing: 09.04.2020
(51) Int. Cl.: H02J 13/00, G06Q 50/06, H02J 3/00, H02J 3/38

(54) **POWER MANAGEMENT DEVICE, POWER MANAGEMENT SYSTEM, AND POWER MANAGEMENT METHOD**

(30) Priority: 12.04.2019 JP 2019076542; 21.05.2019 JP 2019095424
(71) Applicant: Kyocera Corporation, Kyoto-shi, Kyoto 612-8501 (JP)
(72) Inventor: KUSANO, Yoshimasa, Kyoto-shi, Kyoto 612-8501 (JP); AZUMA, Kazuaki, Kyoto-shi, Kyoto 612-8501 (JP); HIROSE, Masahiko, Kyoto-shi, Kyoto 612-8501 (JP); IBARAKI, Kyouichi, Kyoto-shi, Kyoto 612-8501 (JP)
(74) Representative: TBK
(86) International application number: PCT/JP2020/015924
(87) International publication number: WO 2020/209323

(57) **Abstract**

A power management apparatus includes a management unit configured to manage data of output power output from a distributed power supply provided at a predetermined facility, a detection unit configured to detect that a user in possession of the distributed power supply is present in a visit space other than the predetermined facility, and a control unit configured to perform, when the user is present in the visit space, interchange processing of providing the output power to the visit space based on the data of the output power. The interchange processing includes processing of supplying electric power to the user in the visit space.

## Description

### Technical Field

The present disclosure relates to a power management apparatus, a power management system, and a power management method.

### Background Art

In recent years, power generation devices that utilize natural energy such as sunlight, wind power, hydropower, and geothermal heat have attracted attention. A technology has been proposed in which output power output from a power generation device is converted into a predetermined value (valuable points or credit), and the predetermined value is assigned to a terminal (such as an IC card or a mobile phone) of a user who owns the power generation device (for example, Patent Literature 1).

### Citation List

### Patent Literature

Patent Literature 1: JP 2011-180791 A

### Summary of Invention

### Technical Problem

A power management apparatus according to a first aspect includes a management unit configured to manage data of output power output from a distributed power supply provided at a predetermined facility, a detection unit configured to detect that a user in possession of the distributed power supply is present in a visit space other than the predetermined facility, and a control unit configured to perform, when the user is present in the visit space, interchange processing of providing the output power to the visit space based on the data of the output power, the interchange processing including processing of supplying electric power to the user in the visit space.

A power management method according to a second aspect includes managing data of output power output from a distributed power supply provided at a predetermined facility, detecting that a user in possession of the distributed power supply is present in a visit space other than the predetermined facility, and performing, when the user is present in the visit space, interchange processing of providing the output power to the visit space based on the data of the output power, the interchange processing including processing of supplying electric power to the user in the visit space.

### Brief Description of Drawings

FIG. 1 is a diagram illustrating a power management system 100 according to an embodiment.
FIG. 2 is a diagram illustrating a power management apparatus 30 according to the embodiment.
FIG. 3 is a table showing an example of management data according to the embodiment.
FIG. 4 is a diagram illustrating a user medium 50 according to the embodiment.
FIG. 5 is a diagram illustrating a power management method according to the embodiment.
FIG. 6 is a diagram illustrating the power management system 100 according to Modification Example 1.
FIG. 7 is a diagram illustrating the power management system 100 according to Modification Example 2.
FIG. 8 is a diagram illustrating the power management system 100 according to Modification Example 3.

### Description of Embodiments

Embodiments will be described below with reference to the drawings. Note that in the following description of the drawings, identical or similar components will be denoted by identical or similar reference signs. However, the drawings are schematic.

### Embodiment

### Power Management System

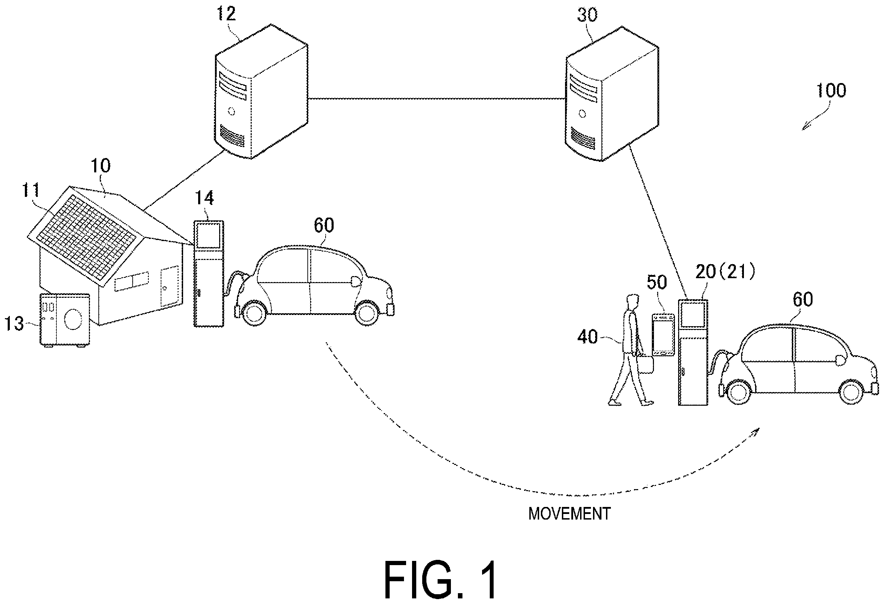

A power management system according to an embodiment will be described below. As illustrated in FIG. 1, a power management system 100 includes a user facility 10, a visit space 20, a power management apparatus 30, and a user medium 50 carried by a user 40.

The user facility 10 is an example of a predetermined facility provided with a solar cell device 11. The solar cell device 11 is an example of a distributed power supply provided in the user facility 10. The solar cell device 11 is also an example of a power generation device that generates electric power by utilizing natural energy. The user facility 10 may include an energy management system (EMS) 12 that manages electric power of the user facility 10. The EMS 12 may be provided by a cloud service. The EMS 12 has a function of communicating with at least the power management apparatus 30. For example, the user facility 10 may be a house owned by the user 40 or an organization (company or school) to which the user 40 belongs. When the user 40 owns a power selling facility (for example, a facility where equipment is certified to sell power from 10 kW to 50 kW), the user facility 10 may include the power selling facility. However, the user facility 10 is not limited thereto, and the user facility 10 need only include the solar cell device 11. The solar cell device 11 may be owned by the user 40 or may be lent to the user 40. In other words, the user 40 need only be a representative person having a right related to the output power of the solar cell device 11.

Here, the EMS 12 communicates with a device provided in the user facility 10 (for example, the distributed power supply such as the solar cell device 11), or communicates with a sensor that detects electric power of the device provided in the user facility 10. In such a case, the EMS 12 may transmit, to the power management apparatus 30, data (hereinafter referred to as output power data) of output power output from the solar cell device 11. The EMS 12 may transmit position information of the user medium 50 to the power management apparatus 30 by communicating with the user medium 50. The position information of the user medium 50 may be transmitted directly from the user medium 50 to the power management apparatus 30.

In the embodiment, the user facility 10 may have a power storage device 13 and a station 14. The power storage device 13 is a device for storing electric power. In other words, the power storage device 13 may store surplus power obtained by subtracting electric power consumed at the user facility 10 from electric power output from the solar cell device 11. The power storage device 13 may store electric power supplied from a power system in a time period (for example, nighttime) during which the fee of electric power to be supplied from the power system is lower than a threshold value. The station 14 is an apparatus configured to charge an electric vehicle (EV) 60. The station 14 may charge the EV 60 by using electric power output from the solar cell device 11, may charge the EV 60 by using electric power supplied from the power system, or may charge the EV 60 by using electric power output from the power storage device 13. The EV 60 may be a private car owned by the user 40. In the case where the EV 60 is charged by using electric power output from the solar cell device 11, the electric power used for charging the EV 60 may be included in electric power consumed at the user facility 10.

The visit space 20 is a space that the user 40 may visit. For example, the visit space 20 may be a space that includes a station 21 provided at a location different from that of the user facility 10. The visit space 20 may be a space where a distance from the station 21 is shorter than or equal to a threshold value (for example, a certain range with the station 21 as a center, premises of a parking lot where the station 21 is provided, premises of a facility such as a convenience store where the station 21 is provided, or the like). The visit space 20 may be regarded as the station 21. The station 21 is a device capable of charging the EV 60.

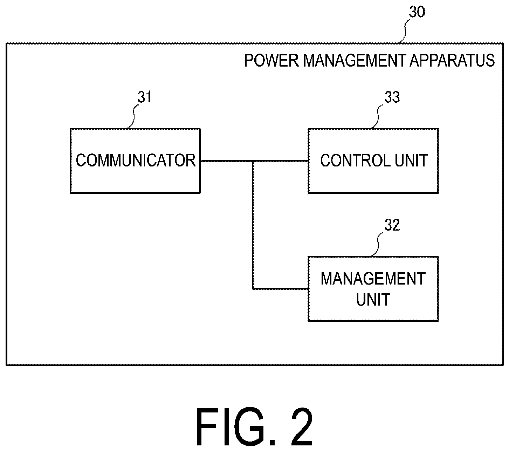

The power management apparatus 30 manages data (the output power data described above) of the output power output from the solar cell device 11. Here, the output power may be electric power that flows in a reverse direction from the user facility 10 to a power system. In other words, the output power may be surplus power obtained by subtracting electric power consumed at the user facility 10 from the electric power output from the solar cell device 11. The power management apparatus 30 performs interchange processing based on the output power data. Details of the power management apparatus 30 will be described later (see FIG. 2).

The user 40 is an example of a user that is in possession of at least the solar cell device 11. The user 40 may own the user facility 10.

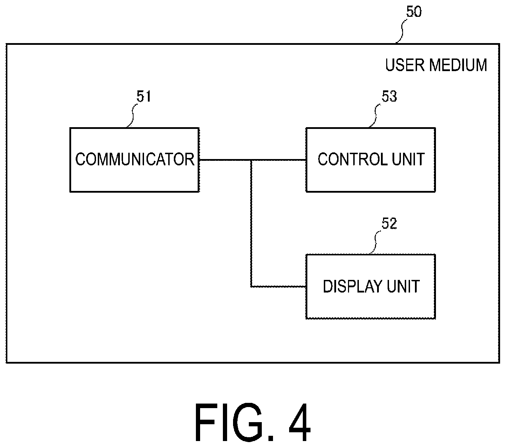

The user medium 50 need only be a medium carried by the user 40. For example, the user medium 50 may be a terminal such as a smartphone or a tablet, or may be an IC card such as a credit card or a point card. In the embodiment, a case in which the user medium 50 is a smartphone is primarily used as an example. Details of the user medium 50 will be described later (see FIG. 4).

Here, the power management apparatus 30 is connected to the user facility 10 (here, the user facility 10 includes the EMS 12, same applies hereafter) via a network. The power management apparatus 30 may be connected to the station 21 via a network. The power management apparatus 30 may be connected to the user medium 50 and the EV 60 via a network. Although not particularly limited, the network may include the Internet, and may include a mobile communication network. The network may include a virtual private network (VPN).

### Power Management Apparatus

The power management apparatus according to the embodiment will be described below. As illustrated in FIG. 2, the power management apparatus 30 includes a communicator 31, a management unit 32, and a control unit 33.

The communicator 31 is configured of a communication module. The communication module may be a wireless communication module compliant with standards such as IEEE 802.11a/b/g/n, ZigBee, Wi-SUN, LTE, 5G, and 6G, or may be a wired communication module compliant with standards such as IEEE 802.3.

The communicator 31 receives the output power data from the user facility 10. The communicator 31 may periodically receive the output power data from the user facility 10, or may receive the output power data from the user facility 10 in response to a request by the power management apparatus 30 (the control unit 33). The communicator 31 may receive the output power data from the user facility 10 in response to identifying proximity to the visit space 20. After proximity to the visit space 20 is identified by the user medium 50, information of the proximity may be transmitted from the user medium 50 to the power management apparatus 30. Proximity to the visit space 20 may be identified based on the position information received from the user medium 50. The output power data may include an instantaneous value of the output power (value of instantaneous power), or may include an integrated value of the output power (value of integrated electric power). The communicator 31 may transmit, to the user medium 50, data of a value (hereinafter, referred to as value data) corresponding to the power interchange to be described below.

The communicator 31 may receive, from the station 21, information indicating that the user medium 50 is connected to the station 21 by short-range wireless communication and that the user medium 50 has requested that the station 21 perform power interchange. The short-range wireless communication may include radio frequency identification (RFID) such as near field communication (NFC), or may include barcode reading. In other words, the communicator 31 is an example of a detection unit that detects that the user 40 is present in the visit space 20 excluding the user facility 10.

The management unit 32 is configured of a storage medium such as a memory including a non-volatile memory, a hard disc drive (HDD) and/or the like, and stores various types of information.

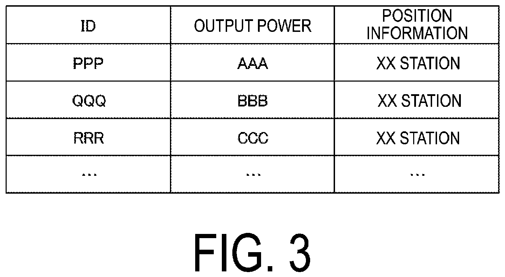

The management unit 32 manages the data (hereinafter, referred to as management data) shown in FIG. 3. The management data includes IDs and output power. The IDs and the output power are examples of the output power data. The ID is information for identifying at least one of the user facility 10 and the solar cell device 11. The management data may include position information. The position information includes information indicating the visit space 20 in which the user 40 is present. The position information may include information indicating that the user 40 is present in the user facility 10. The position information may include information indicating that the user 40 is present in neither the user facility 10 nor the visit space 20. The position information may be identified based on information received from an EMS 21 or the user medium 50.

The control unit 33 may include at least one processor. The at least one processor may be configured of a single integrated circuit (IC) or a plurality of circuits (such as integrated circuits and/or discrete circuits) connected so as to be capable of communicating with each other.

When the user 40 is present in the visit space 20, the control unit 33 performs interchange processing of providing the output power to the visit space 20 based on the output power data. Here, the interchange processing is processing of providing the output power from the user facility 10 to the visit space 20, and includes, for example, processing that will be described below.

The interchange processing may include processing of supplying electric power to the user 40 in the visit space 20 (hereinafter, referred to as power supply processing). Specifically, electric power is supplied to the user 40 in the visit space 20 within a range that does not exceed an upper limit of output power that is output from the solar cell device 11.

For example, the electric power to be supplied to the user 40 in the visit space 20 (hereinafter, referred to as "electric power consumed at visit the destination") may be subtracted from the output power output from the solar cell device 11 rather than being borne by a management entity of the visit space 20 (hereinafter, simply referred to as "management entity"). In such a case, the user 40, the power management apparatus 30, and the management entity may all perform cancellation processing on the electric power consumed at the visit destination. That is, it is assumed that the output power output from the solar cell device 11 will be sold by the user 40 to the power management apparatus 30, and after the power management apparatus 30 sells output power corresponding to the electric power consumed at the visit destination to the management entity, the user 40 may purchase the output power corresponding to the electric power consumed at the visit destination from the management entity. Here, an amount of money with which the user 40 purchases electric power from the management entity may be the same as or smaller than an amount of money at which the user 40 sells electric power to the power management apparatus 30. An amount of money with which the management entity purchases electric power from the power management apparatus 30 may be different from an amount of money at which the management entity sells electric power to the user 40.

In the embodiment, the power supply processing may be processing of charging the EV 60 with electric power supplied from the station 21. In other words, the electric power consumed at the visit destination is electric power to be charged to the EV 60 from the station 21. In such a case, the electric power to be charged from the station 21 to the EV 60 may be larger than electric power to be provided in the interchange processing (that is, the electric power consumed at the visit destination). An amount of differential electric power between the electric power to be charged from the station 21 to the EV 60 and the electric power to be provided in the interchange processing is supplied from the power system connected to the station 21.

Further, in the embodiment, a right associated with the electric power consumed at the visit destination may be transferred from the user 40 to the management entity. The right associated with the electric power consumed at the visit destination may include at least one of the fact that the output power has been output from the solar cell device 11, and an environmental added value associated with the output power (for example, a tradable green certificate).

In such cases, the control unit 33 may assign a value corresponding to the power interchange to the user 40. For example, the control unit 33 may transmit the value data to the user medium 50 by controlling the communicator 31.

For example, the value to be assigned to the user 40 may be a value corresponding to at least one of the electric power consumed at the visit destination and the right associated with the electric power consumed at the visit destination. Although not particularly limited, the form of the value may be money, or may be points that are exchangeable for a product, a service, or money. The money may be a legal currency or a virtual currency. The money or points may be stored in the user medium 50 as value data (electronic data).

The control unit 33 may set the value to be assigned to the user 40 based on at least one of the electric power consumed at the visit destination and the right associated with the electric power consumed at the visit destination. For example, the control unit 33 may set a higher value for greater electric power consumed at the visit destination. For example, the control unit 33 may set a higher value for a higher environmental added value associated with the electric power consumed at the visit destination.

### User Medium

A user medium according to the embodiment will be described below. As illustrated in FIG. 4, the user medium 50 includes a communicator 51, a display unit 52, and a control unit 53.

The communicator 51 is configured of a communication module. The communication module may be a wireless communication module compliant with standards such as IEEE 802.11a/b/g/n, ZigBee, Wi-SUN, LTE, 5G, and 6G, or may be a wired communication module compliant with standards such as IEEE 802.3.

The communicator 51 may receive the output power data from the user facility 10. The data (the value data described above) of the value corresponding to the power interchange may be received from the power management apparatus 30. The communicator 51 may transmit the fact of requesting the power interchange to the station 21 or the power management apparatus 30. The communicator 51 may transmit the fact of having completed the power interchange to the station 21 or the power management apparatus 30.

The display unit 52 includes a panel such as a liquid crystal panel or an organic EL panel. The display unit 52 may include a touch panel.

The display unit 52 may display the output power data. The display unit 52 may display the right related to the output power. The display unit 52 may display information (for example, a level of the output power or the environmental added value) for setting the content of the right related to the output power. The display unit 52 may display the value to be assigned by the interchange processing.

The control unit 53 may include at least one processor. The at least one processor may be configured of a single integrated circuit (IC) or a plurality of circuits (such as integrated circuits and/or discrete circuits) connected so as to be capable of communicating with each other.

The control unit 53 may control an image to be displayed on the display unit 52 based on information received by the communicator 51. The control unit 53 may control the communicator 51 based on an operation of the user based on the image displayed on the display unit 52.

### Power Management Method

A power management method according to the embodiment will be described below.

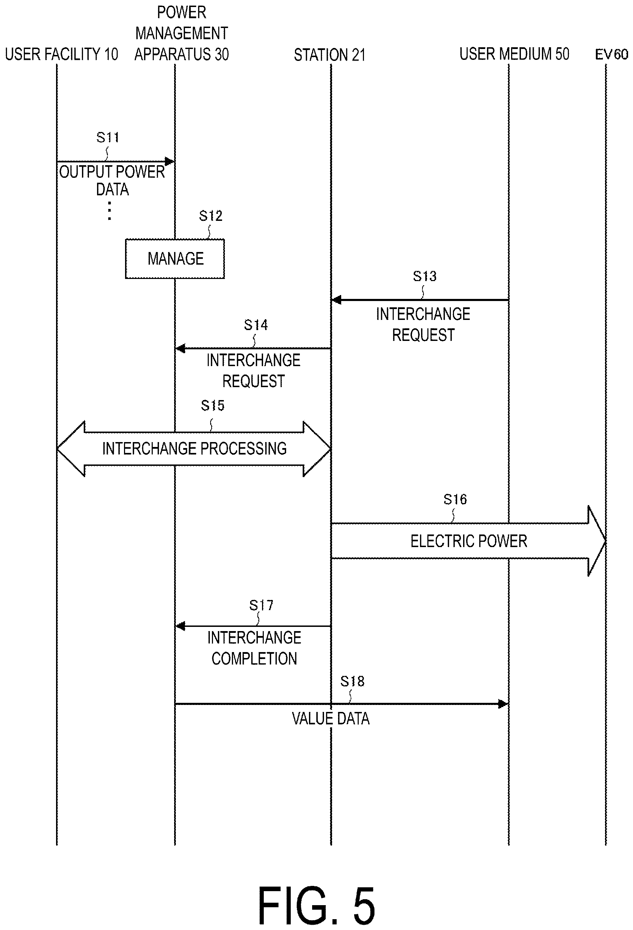

As illustrated in FIG. 5, in step S11, the user facility 10 transmits the output power data to the power management apparatus 30. For example, the user facility 10 periodically transmits the output power data that is managed (or stored) by the EMS 12 to the power management apparatus 30.

In step S12, the power management apparatus 30 manages the output power data.

In step S13, the user medium 50 transmits a request for the power interchange (an interchange request in FIG. 5) to the station 21. The interchange request may include identification information of the user medium 50, or may include position information of the user medium 50.

In step S14, the station 21 transmits a request for the power interchange (an interchange request in FIG. 5) to the power management apparatus 30. The interchange request may include identification information of the station 21, position information of the station 21, the identification information of the user medium 50, or the position information of the user medium 50.

In step S15, the power management apparatus 30 performs interchange processing of providing the output power from the user facility 10 to the visit space 20. For example, the interchange processing is processing of supplying electric power to the user 40 in the visit space 20. For example, as illustrated in step S16, the station 21 uses the electric power provided in the interchange processing to charge the EV 60.

In step S17, the station 21 transmits, to the power management apparatus 30, the fact that the power interchange is complete (interchange completion in FIG. 5). The interchange completion may include the identification information of the station 21, the position information of the station 21, the identification information of the user medium 50, or the position information of the user medium 50.

In step S18, the power management apparatus 30 sets the value to be assigned to the user 40, and transmits the value data described above to the user medium 50. The method of setting the value is as described above.

Note that in step S17, for example, when the station 21 notifies the power management apparatus 30 of the "interchange completion" for reporting completion of charging, the user medium 50 is notified of the value data in step S18, and as a result, the user can know the completion of charging.

Also, before step S17, a charge completion notification may be transmitted from the EV 60 to the station 21, for example.

### Actions and Effects

In the embodiment, when the user 40 is present in the visit space 20, the power management apparatus 30 performs the interchange processing of providing the output power to the visit space 20 based on the output power data. In addition, the interchange processing includes the power supply processing. Thus, the output power output from the solar cell device 11 provided at the user facility 10 can be used as the electric power consumed at the visit destination in the visit space 20, and the user 40 can freely utilize the output power in terms of bringing the output power output from the solar cell device 11 to the visit space 20.

Further, when the interchange processing includes transferring the right associated with the electric power consumed at the visit destination, it is also beneficial for the management entity. For example, the management entity can contribute to the environment by assigning the value to the user 40 in return for obtaining an environmental added value from the user 40.

### Modification Example 1

A Modification Example 1 of the embodiment will be described below. In the following, differences from the embodiment will be mainly described.

In the embodiment, the EV 60 is a private car owned by the user 40. In contrast, in Modification Example 1, the EV 60 is an electric vehicle supplied by two or more users (so-called "car sharing").

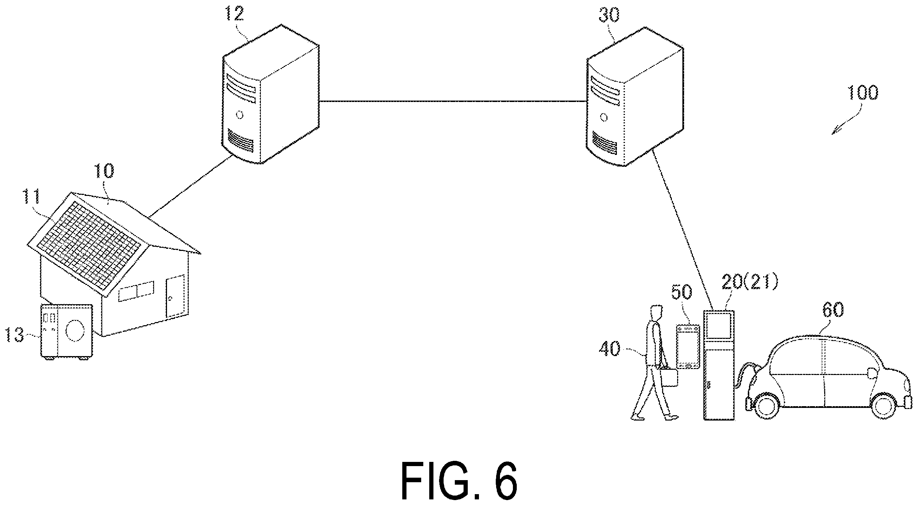

Specifically, as illustrated in FIG. 6, the output power output from the solar cell device 11 provided at the user facility 10 is provided to the visit space 20, and the EV 60 is charged using the electric power supplied from the station 21 in the visit space 20. Details of the interchange processing are similar to those of the embodiment.

In such a case, the station 21 may be provided at the hub of the car sharing (for example, at a parking lot). In such a case, the station 21 may have a function of performing a function (for example, user authentication) for performing processing of initiating or ending the car sharing. Alternatively, the station 21 may be provided at a location other than the hub of the car sharing. In such a case, the station 21 may be managed by a business operator having a partnership with a business operator of the car sharing.

Although car sharing has been described here, Modification Example 1 is not limited thereto. For example, the EV 60 may be an electric vehicle that is rented out by a business operator to the user 40 (car rental).

### Modification Example 2

Hereinafter, a Modification Example 2 of the embodiment will be described. In the following, differences from the embodiment will be mainly described.

In the embodiment, a case of charging the EV 60 in the visit space 20 is described as an example of the power supply processing. In contrast, in Modification Example 2, a case in which the visit space 20 is a facility other than the user facility 10 will be described.

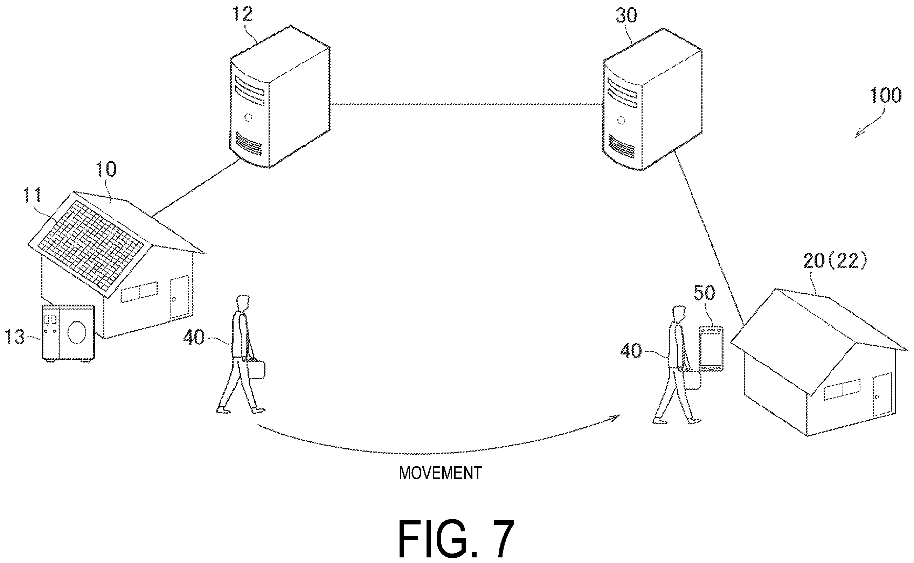

Specifically, as illustrated in FIG. 7, the visit space 20 is a visit facility 22 other than the user facility 10. The visit facility 22 may be a facility of an acquaintance of the user 40, or may be a facility (for example, a company or school) to which the user 40 commutes.

In such a case, the interchange processing is processing in which the output power output from the solar cell device 11 provided at the user facility 10 is provided as electric power to be consumed by the user 40 at the visit facility 22 (that is, the electric power consumed at the visit destination).

For example, when the electric power consumed at the visit destination cannot be identified, all the output power output from the solar cell device 11 may be considered as being provided to the visit facility 22 while the user 40 is present at the visit facility 22. Alternatively, predetermined electric power included in the output power output from the solar cell device 11 may be considered as being provided to the visit facility 22. The predetermined electric power may be defined by specified electric power, or may be defined by a specified percentage with respect to the output power. The electric power provided to the visit facility 22 may be provided free of charge, or may be provided at a charge. Further, a value corresponding to the power interchange may be assigned to the user 40.

Alternatively, when the electric power consumed at the visit destination can be identified, electric power corresponding to the electric power consumed at the visit destination may be considered as being provided to the visit facility 22. In such a case, the electric power corresponding to the electric power consumed at the visit destination may be provided free of charge, or may be provided at a charge. Further, a value corresponding to the power interchange may be assigned to the user 40.

Alternatively, even when the electric power consumed at the visit destination can be identified, all the output power output from the solar cell device 11 may be considered as being provided to the visit facility 22 while the user 40 is present at the visit facility 22. Alternatively, predetermined electric power included in the output power output from the solar cell device 11 may be considered as being provided to the visit facility 22. The predetermined electric power may be defined by specified electric power, or may be defined by a specified percentage with respect to the output power. The electric power provided to the visit facility 22 may be provided free of charge, or may be provided at a charge. Alternatively, the electric power corresponding to the electric power consumed at the visit destination may be provided free of charge, and differential electric power between the electric power to be provided to the visit facility 22 and the electric power consumed at the visit destination may be provided at a charge. Further, a value corresponding to the power interchange may be assigned to the user 40.

### Modification Example 3

A Modification Example 3 of the embodiment will be described below. In the following, differences from the embodiment will be mainly described.

In the embodiment, a case of charging the EV 60 in the visit space 20 is described as an example of the power supply processing. In contrast, in Modification Example 3, the visit space 20 may be a space inside a moving body that uses electricity as an energy source.

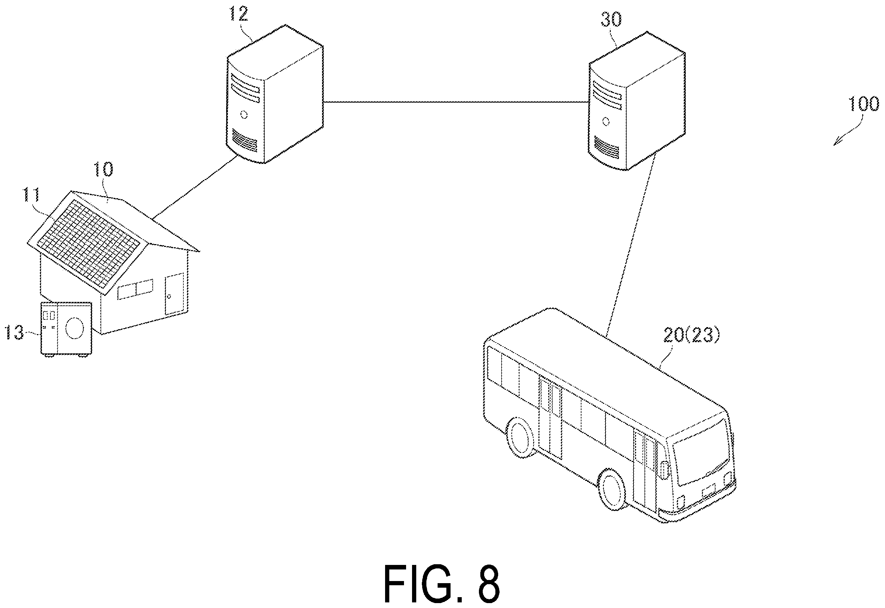

Specifically, as illustrated in FIG. 8, the visit space 20 is a space inside an electric bus 23 that uses electricity as an energy source.

In such a case, since electric power is consumed by the electric bus 23 on which the user 40 is riding, some of the electric power to be consumed by the electric bus 23 may be considered to be electric power consumed by the user 40 in the electric bus 23 (that is, the electric power consumed at the visit destination). That is, the interchange processing is processing in which the output power output from the solar cell device 11 provided at the user facility 10 is provided as some of the electric power consumed by the electric bus 23.

Predetermined electric power included in the output power output from the solar cell device 11 may be considered as being provided to the electric bus 23. The predetermined electric power may be defined by specified electric power, or may be defined by a specified percentage with respect to the output power. An amount of money corresponding to the electric power to be provided to the electric bus 23 may be subtracted from a fare of the electric bus 23. Further, a value corresponding to the power interchange may be assigned to the user 40. Alternatively, all the output power output from the solar cell device 11 may be provided to the electric bus 23 while the user 40 is riding on the electric bus 23.

Here, the moving body that uses electricity as an energy source may be a moving body such as an aircraft, a ship, a taxi, or a train, in addition to the electric bus 23.

### Modification Example 4

A Modification Example 4 of the embodiment will be described below. In the following, differences from the embodiment will be mainly described.

In the embodiment, the distributed power supply is the solar cell device 11. In contrast, in Modification Example 4, the distributed power supply may include a power supply other than the solar cell device 11.

In Modification Example 4, the distributed power supply may include a fuel cell device. For example, the fuel cell device may be a solid oxide fuel cell (SOFC), a polymer electrolyte fuel cell (PEFC), a phosphoric acid fuel cell (PAFC), or a molten carbonate fuel cell (MCFC).

In Modification Example 4, the power generation device that generates electric power by utilizing natural energy may include any one of a wind power generation device, a geothermal power generation device, and a hydroelectric power generation device. The natural energy may also be referred to as renewable energy.

In Modification Example 4, two or more distributed power supplies selected among the various distributed power supplies described above may be used. The two or more distributed power supplies may include the solar cell device 11.

### Modification Example 5

A Modification Example 5 of the embodiment will be described below. In the following, differences from the embodiment will be mainly described.

As described in the embodiment, the user 40 having the distributed power supply (solar cell device 11) is a representative person who has the right related to the output power of the solar cell device 11. In other words, the distributed power supply may be owned by the user 40 or may be lent to the user 40.

In Modification Example 5, a case in which the distributed power supply (solar cell device 11) is owned by a third party will be described. In such a case, an aspect may be included in which the distributed power supply is lent to the user 40. Also in such a case, since the distributed power supply is installed at the user facility 10, the user 40 does not own the distributed power supply, but the user 40 may be considered to have the distributed power supply. Alternatively, the user 40 may be considered to have the distributed power supply because the user 40 has the right to perform the interchange processing on the output power output from the distributed power supply. For example, the third party may be a business operator operating the power management apparatus 30 described above. Such a business operator may be an operator such as a power generation utility, a power transmission and distribution utility, a power retailer, or a resource aggregator.

In such a case, the third party may receive, from the user 40, a price (electricity fee) for electric power consumed at the user facility 10. Furthermore, as with the embodiment, the interchange processing may be performed on surplus power obtained by subtracting electric power consumed at the user facility 10 from electric power output from the solar cell device 11. As with the embodiment, a value corresponding to the interchange processing may be assigned to the user 40. In such a case, the third party may receive from the user 40, of the electric power output from the solar cell device 11, a price for electric power provided by the interchange processing.

In this manner, in the case where the distributed power supply is owned by the third party, the user facility 10 may be based on a concept that includes an apartment block configured of two or more residential units, a concept that includes a building occupied by two or more tenants, or a concept that includes multiple facilities connected to a microgrid.

### Other Embodiments

Although the present disclosure has been described by the above-described embodiment, it should be understood that the description and the drawings which form a part of this disclosure do not limit this disclosure. Various alternative embodiments, examples, and operational techniques will be apparent from this disclosure to those skilled in the art.

In the embodiment, the method of assigning a value to the user 40 is a method of sending value data to the user medium 50. However, the embodiment is not limited to this example. A value corresponding to the interchange processing may be assigned to means other than the user medium 50. For example, the value may be assigned as points managed by a management entity. The medium to which the value is assigned may be a credit card or a point card, or may be a server managed by the management entity. In such a case, the power management apparatus 30 may transmit the value data to the management entity. Although not specifically mentioned in the embodiment, an electric power provider that manages the user facility 10 may be different from an electric power provider that manages the visit space 20. The electric power provider may be a business operator such as a power generation utility, a power transmission/distribution utility, an electricity retailer, or a resource aggregator. The resource aggregator is an electric power provider that provides electric power that flows in a reverse direction to a power generation utility, a power transmission/distribution utility, an electricity retailer, or the like in a virtual power plant (VPP).

Although not specifically mentioned in the embodiment, the electric power may be instantaneous power (kW) or integrated electric power (kWh). For example, the output power data may include instantaneous power (kW) or integrated electric power (kWh). The value corresponding to the interchange processing may be determined based on the integrated electric power (kWh) of the electric power provided by the interchange processing.

Although not specifically mentioned in the embodiment, there may be provided a program that causes a computer to execute each process to be performed by the power management apparatus 30 or the user medium 50. In addition, the program may be recorded in a computer-readable medium. Use of the computer-readable medium enables the program to be installed on a computer. Here, the computer-readable medium on which the program is recorded may be a non-transitory recording medium. The non-transitory recording medium is not particularly limited and may be, for example, a recording medium such as a CD-ROM or a DVD-ROM.

Alternatively, a chip configured of a memory that stores a program for executing each process to be performed by the power management apparatus 30 or the user medium 50 and a processor that executes the program stored in the memory may be provided.

Note that the entire contents of JP 2019-76542 (filed on April 12, 2019) and JP 2019-95424, (filed on May 21, 2019) are incorporated herein by reference.

## Claims

1. A power management apparatus comprising:
a management unit configured to manage data of output power output from a distributed power supply provided at a predetermined facility;
a detection unit configured to detect that a user in possession of the distributed power supply is present in a visit space other than the predetermined facility; and
a control unit configured to perform, when the user is present in the visit space, interchange processing of providing the output power to the visit space based on the data of the output power, wherein
the interchange processing includes processing of supplying electric power to the user in the visit space.

2. The power management apparatus according to claim 1, wherein
the distributed power supply includes a power generation device configured to utilize natural energy to generate electric power.

3. The power management apparatus according to claim 1 or 2, wherein
the control unit is configured to assign a value corresponding to the interchange processing to the user.

4. A power management system comprising:
a distributed power supply provided at a predetermined facility;
a management unit configured to manage data of output power output from the distributed power supply;
a detection unit configured to detect that a user in possession of the distributed power supply is present in a visit space other than the predetermined facility; and
a control unit configured to perform, when the user is present in the visit space, interchange processing of providing the output power to the visit space based on the data of the output power, wherein
the interchange processing includes processing of supplying electric power to the user in the visit space.

5. A power management method comprising:
managing data of output power output from a distributed power supply provided at a predetermined facility;
detecting that a user in possession of the distributed power supply is present in a visit space other than the predetermined facility; and
performing, when the user is present in the visit space, interchange processing of providing the output power to the visit space based on the data of the output power, wherein
the interchange processing includes processing of supplying electric power to the user in the visit space.
